## Europäisches Patentamt
## European Patent Office
## Office européen des brevets

(19)

(11) Numéro de publication: **0 080 920 B1**

(12) # FASCICULE DE BREVET EUROPEEN

(45) Date de publication du fascicule du brevet:
31.07.85

(51) Int. Cl.⁴: **B 64 C 27/48**, B 64 C 27/32

(21) Numéro de dépôt: **82402098.6**

(22) Date de dépôt: **17.11.82**

(54) Rotor pour giravions, à articulations intégrées dans le pied de pale.

(30) Priorité: **25.11.81 FR 8122027**

(43) Date de publication de la demande:
**08.06.83 Bulletin 83/23**

(45) Mention de la délivrance du brevet:
**31.07.85 Bulletin 85/31**

(84) Etats contractants désignés:
**DE GB IT**

(56) Documents cités:
**DE - A - 1 531 374**
**FR - A - 2 282 367**
**FR - A - 2 305 343**
**FR - A - 2 427 251**
**FR - A - 2 456 034**

(73) Titulaire: **AEROSPATIALE Société Nationale Industrielle,
37 boulevard de Montmorency, F-75781 Paris
Cédex 16 (FR)**

(72) Inventeur: **Mouille, René Louis, Villa "La Pinède" Le
Coton Rouge, Aix-en-Provence Bouches-du-Rhône (FR)**

(74) Mandataire: **Lepeudry-Gautherat, Thérèse et al,
CABINET ARMENGAUD JEUNE CASANOVA et
LEPEUDRY 23 boulevard de Strasbourg, F-75010 Paris
(FR)**

BUNDESDRUCKEREI BERLIN

## Description

La présente invention a pour objet un rotor pour giravions, comportant un moyeu rigide, auquel le pied de chaque pale est accouplé par l'intermédiaire d'une butée sphérique lamifiée et d'une contre-fiche de rappel élastique en trainée, se présentant sous la forme d'un élément allongé de rappel élastique à amortissement incorporé, comportant des éléments amortisseurs en élastomère et constituant un dispositif communément appelé adaptateur de fréquences à amortissement incorporé.

Par le document FR-A-2 427 251 demande de brevet français n° 7816521, déposée le 2 juin 1978 au nom de la Demanderesse), on connait déjà un tel rotor, dont les adaptateurs de fréquences à amortissement incorporé, constitués chacun par un empilement alterné de plaques métalliques et de plaques d'un matériau visco-élastique à grande rémanence aux déformations, ont chacun leurs extrémités accouplées respectivement, par l'intermédiaire d'une rotule, au pied de la pale correspondante pour l'extrémité externe par rapport au moyeu, et, pour l'extrémité interne, au moyeu, de sorte que l'adaptateur de fréquences soit toujours peu incliné sur la pale correspondante, et que le centre de l'une des rotules soit voisin de l'axe de battement de la pale, lequel passe par le centre de la butée sphérique lamifiée correspondante.

Dans les formes de réalisation d'un tel rotor, qui sont décrites dans le document précité, la partie périphérique du moyeu, en forme d'anneau plat, de pourtour polygonal convexe ou sensiblement circulaire, est traversée dans la direction de l'axe du rotor par autant d'ouvertures qu'il y a de pales, et chaque butée sphérique lamifiée est montée entre le bord extérieur de l'ouverture correspondante et les extrémités des branches d'une pièce fourchue, solidaire du pied de la pale correspondante; cette pièce fourchue étant constituée soit par un prolongement du pied de la pale correspondante, dont les extrémités des branches sont fixées, par exemple par deux boulons, au support de la butée sphérique lamifiée correspondante, soit par une chape radiale, de préférence double, dont l'extrémité interne par rapport au moyeu comprend deux plaques planes et rigides, disposées de part et d'autre de la partie périphérique du moyeu sans contact avec lui et fixées au support de la butée sphérique lamifiée correspondante, par exemple par deux boulons, et dont l'extrémité externe est assujetie au pied de la pale par deux axes sensiblement perpendiculaire au plan du rotor, dont l'un est amovible pour permettre le repliage de la pale correspondante dans le plan du rotor par pivotement autour de l'autre axe.

De plus, dans toutes les formes de réalisation faisant l'objet du document, la rotule dont le centre est voisin de l'axe de battement de la pale correspondante est la rotule de liaison au moyeu de l'adaptateur de fréquences correspondant.

Dans le but d'être mécaniquement plus robuste et d'offrir une trainée aérodynamique plus réduite que les formes de réalisation du rotor de giravion selon le document précité, d'autres formes de réalisation, plus compactes et de structures simplifiées, ont été décrites dans le document FR-A-2 456 034 premier certificat d'addition n° 7911585, déposé le 8 mai 1979).

Dans ces dernières, le moyeu comporte un fût central, sensiblement dans le prolongement du mât rotor et portant un plateau supérieur et un plateau inférieur, et l'un des éléments rigides de chaque butée sphérique lamifiée est disposé entre les bords des deux plateaux, à la façon d'une entretoise, et fixé directement à ces derniers, tandis que l'autre élément rigide de la butée sphérique lamifiée est réuni au pied de la pale correspondante par une chape radiale, de préférence double, et évidée dans sa partie tournée vers le moyeu pour permettre le libre passage de la butée, l'extrémité externe de l'adaptateur de fréquences correspondant étant accouplée par l'intermédiaire d'une rotule, dont le centre est voisin de l'axe de battement de la pale correspondante, à la chape associée à cette pale.

Comme les plateaux supérieur et inférieur du moyeu du rotor de ces réalisations ne sont pas évidés pour recevoir les butées sphériques lamifiées correspondantes, et que, de plus, les bords de ces plateaux sont entretoisés par l'un des éléments rigides de chacune des butées, les plateaux du moyeu présentent une excellente résistance mécanique aux efforts, sensiblement radiaux, de traction résultant de l'action de la force centrifuge sur les pales, comme aux moments de flexion statiques et dynamiques, de battement et de trainée, que les pales excercent sur les organes assurant leurs laisons au moyeu.

Mais les réalisations faisant l'objet du document FR-A-2 456 034, comme celles décrites par le document FR-A- 2 427 251 pour lesquelles la pièce fourchue assurant la liaison de la butée sphérique lamifiée à la pale n'est pas constituée par un prolongement du pied de pale, présentent l'inconvénient de comporter une chape, de préférence double, interposée entre le pied de chaque pale et la butée sphérique lamifiée correspondante.

Une telle chape, généralement constituée de deux plaques rigides solidarisées l'une à l'autre, dans leurs parties centrales, par une entretoise fixée entre elles, dont les parties d'extrémités les plus éloignées du moyeu reçoivent entre elles, avec un léger jeu, le pied de la pale correspondante et portent au moins deux axes de fixation du pied de pale à la chape, et dont les parties d'extrémités les plus proches du moyeu, évidées pour le libre passage de la butée sphérique lamifiée dans les réalisations du document FR-A-2 456 034 sont solidarisées à celui des éléments rigides de la butée lamifiée sphérique correspondante, qui n'est pas solidaire du moyeu, constitue un élément pénalisant sur le plan du poids et de l'encombrement radial, dans le plan du rotor, et axial, dans la direction de l'axe de rotation du rotor, de par sa présence et du fait que les pieds de pale sont éloignés du moyeu, ce qui n'est pas sans conséquence défavorable sur la trainée aérodynamique du rotor.

De plus, si, comme cela est le cas dans le certificat d'addition précité, l'entretoise de la chape se prolonge hors des plaques de la chape, du côté du bord d'attaque et/ou du bord de fuite de la pale correspondante, par un premier et, éventuellement, par un second appendice coudé, conformé et aménagé pour recevoir l'axe d'articulation d'une extrémité du levier de commande du pas de la pale et la rotule de l'extrémité externe de l'adaptateur de fréquence correspondant, la chape est de sucroît de structure complexe et de réalisation coûteuse.

Par la présente invention, on se propose de concevoir des rotors présentant un encombrement, un poids et un coût de fabrication réduits par rapport à ceux décrits dans le document FR-A-2 456 034, afin respectivement de diminuer la trainée et d'obtenir un rotor économique.

A cet effet, le rotor selon la présente invention, du type dont le moyeu rigide, comportant un fût central sensiblement dans le prolongement du mât rotor, et portant un plateau supérieur et un plateau inférieur, est accouplé au pied de chaque pale par l'intermédiaire d'une butée sphérique lamifiée et d'une contre fiche de rappel élastique en trainée, se présentant, de préférence, sous la forme d'un adaptateur de fréquences constitué par un empilement alterné de plaques rigides métalliques ou composites, et de plaques d'un matériau viscoélastique à grande rémanence aux déformations, et ayant ses extrémités interne et externe accouplées chacune par une rotule respectivement au moyeu et au pied de la pale correspondante, le centre de la rotule de l'extremité externe étant voisin de l'axe de battement de la pale, lequel passe par le centre de la butée sphérique lamifiée correspondante, dont l'un des éléments rigides, fixe par rapport aux plateaux du moyeu, est disposé entre les bords de ces derniers, à la façon d'une entretoise rigide, se caractérise en ce que chaque pale du rotor présente une ossature résistante comprenant, dans la zone du pied de pale, une boucle rigide contournant de façon continue la butée sphérique lamifiée correspondante et engagée dans l'autre élément rigide, mobile par rapport aux plateaux, de cette butée.

De préférence, cette boucle rigide, constituée par le prolongement de l'ossature résistante de la pale, qui forme le longeron dans la partie courante de celle-ci, et qui est dimensionnée pour transmettre des efforts de traction centrifuge, ainsi que les moments de flexion et les efforts tranchants statiques et dynamiques de battement et de traînée, est réalisée par un agglomérat de stratifils enduits de résine.

Il est certes déjà connu de conformer, en une ou plusieurs boucles adjacentes dans la zone du pied de pale, des stratifils entrant dans la constitution d'une pale de rotor, mais ceci a été réalisé pour que chacune des boucles entoure une douille destinée à être traversée par un axe de retenue du pied de pale aux organes mécaniques du moyeu, généralement par l'intermédiaire d'une chape.

Mais, à la connaisance de la demanderesse, il n'a jamais été encore proposé d'aménager la zone du pied de pale, de façon à ce qu'elle reçoive directement une butée sphérique lamifiée, ce qui permet à la pale tous les débattements autour du centre de cette butée, sans nécessiter aucune pièce intermédiaire.

De préférence, selon l'invention, l'élément rigide mobile de la butée sphérique lamifiée, dans lequel la boucle rigide d'extrémité de pale correspondante est engagée, est constitué par une armature, dont la face opposée à l'axe de rotation du rotor se présente sous la forme d'une cuvette sphérique concave, et dont la face tournée vers l'axe de rotation du rotor présente une cavité servant de logement à la boucle rigide, tandis que l'élément rigide fixe de la butée sphérique lamifiée, disposé à la façon d'une entretoise rigide entre les bords des deux plateaux, est constitué par un manchon, dont l'alésage est traversé par une unique broche de liaison aux deux plateaux, et dont la paroi externe présente deux renflements en forme de calotte sphérique, de préférence évidée, et centrée sur l'axe longitudinal de la pale, l'un de ces renflements coopérant avec un coin de maintien et de blocage de la boucle rigide sur l'élément rigide mobile de la butée lamifiée.

De préférence également, les deux parties en vis-à-vis de la boucle rigide du pied de chaque pale, sont séparées l'une de l'autre par un bloc de matériau de remplissage, de préférence en tissu stratifié ou en résine chargée, du type qualifié par le terme anglais de »compound«, délimitant avec la partie de la boucle rigide entourant de façon continue la butée sphérique lamifiée, un logement pour cette dernière, les faces de la partie de la boucle rigide reçue dans le logement de la première armature étant revêtues d'au moins une couche de tissu de protection, en fibres à haute résistance.

Le rotor selon l'invention comprend également, pour chaque pale, un levier de commande de pas, présentant un premier étrier, dont les branches s'étendent transversalement, l'une par dessus et l'autre par dessous le pied de la pale correspondante, auquel le levier est fixé par des boulons, ainsi qu'un second étrier dont les branches portent un axe, de préférence amovible pour permettre le pivotement de la pale correspondante, et sur lequel est montée une rotule d'accouplement à l'extrémité externe de la contre fiche de rappel élastique correspondante. Cette extrémité externe de la contrefiche peut être simultanément accouplée à une extrémité d'une biellette de commande du pas de la pale correspondante, mais il est également possible que, selon l'invention, le levier de commande de pas présente un troisième étrier, dont les branches portent un axe, de préférence amovible pour permettre le pivotement de la pale correspondante, et sur lequel est montée une rotule d'accouplement à une extrémité d'une biellette de commande de pas de la pale correspondante.

De façon en soit connue, la rotule d'accouplement de l'extrémité interne de chaque contrefiche de rappel élastique au moyeu est reliée par un système vis-écrou à une zone annulaire du fût central tubulaire du moyeu, dont la paroi peut présenter, au niveau de ladite zone annulaire, soit une surépaisseur traversée par des vis sur la tige desquelles sont montées les rotules correspondantes, soit des pattes de reprise radiales, sur lesquelles sont montées lesdites rotules.

Il est également bien connu que de tels rotors comprennent, sous le bord du plateau inférieur et pour chaque pale, une butée éclipsable en vol, sous l'action de la force centrifuge, et disposée de façon à coopérer avec une portée solidaire de la pale pour limiter les battements de cette dernière vers le bas à l'arrêt et aux faibles vitesses de rotation du rotor. Mais, selon l'invention, la butée éclipsable en vol est de préférence portée par l'extrémité inférieure de l'unique broche de liaison du pied de pale aux deux plateaux du moyeu, et la portée coopérante avec la butée éclipsable est de préférence intégrée à la branche inférieure du premier étrier du levier de commande de pas.

Enfin, en ce qui concerne la réalisation du moyeu, il est possible que le fût central du moyeu, avec lequel le plateau supérieur constitue un premier élément monobloc métallique, soit fixé, par exemple par une couronne de boulons, au plateau inférieur constituant lui-même un second élément monobloc métallique avec la partie supérieure du mât rotor, mais il est également possible que le fût central du moyeu, solidaire du plateau supérieur, soit fixé, toujours par une couronne de boulons, au plateau inférieur, lui-même solidaire de la partie supérieure du mât rotor.

La présente invention sera mieux comprise à l'aide de la description donnée ci-après, à titre non limitatif, d'exemples de réalisation en référence aux dessins sur lesquels:

— la figure 1 représente une vue en coupe partielle verticale passant par le plan médian d'une pale, d'un premier exemple de rotor,

— la figure 2 représente une vue en coupe partielle selon la ligne II-II de la figure 1,

— la figure 3 représente une vue d'un étrier monté sur une pale d'un rotor selon les figures 1 et 2 précédentes,

— la figure 4 représente une vue partielle analogue à la figure 2, pour un second exemple de réalisation de levier de commande de pas,

— la figure 5 représente une vue analogue à la figure 2 pour un second exemple de rotor selon l'invention et,

— la figure 6 représente une vue en coupe partielle selon la ligne VI-VI de la figure 5.

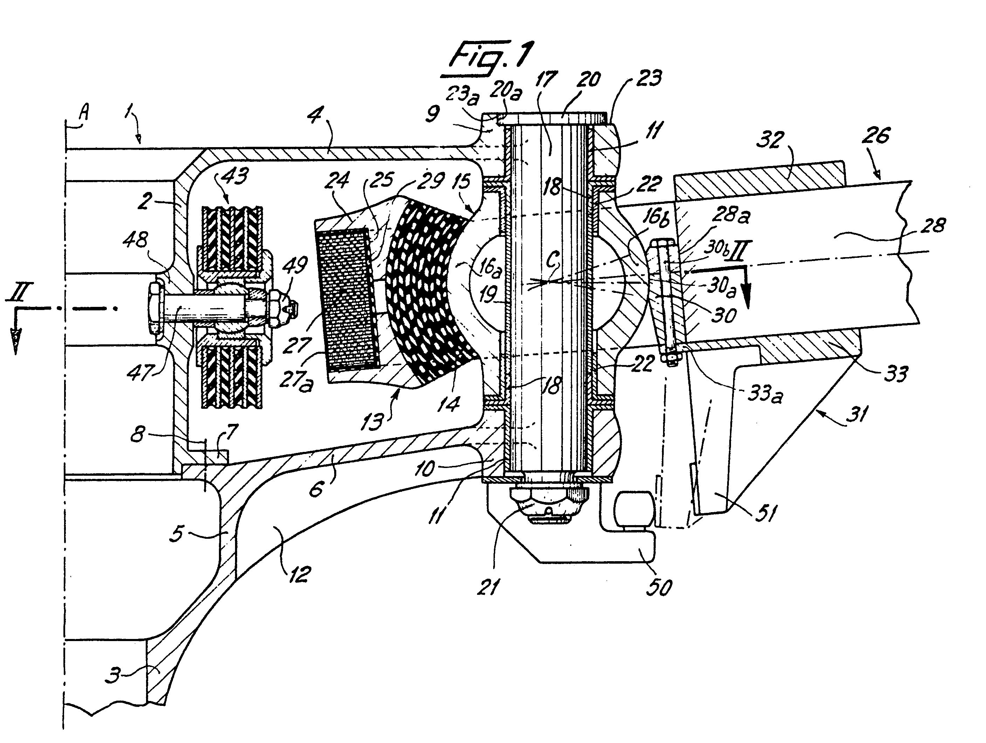

Le rotor principal d'hélicoptère, qui est illustré schématiquement et partiellement sur les figures 1 à 3 est du type quadripale. Il comporte un moyeu rigide 1, dont la partie centrale est formée par un fût central tubulaire 2, de section circulaire et de diamètre légèrement supérieur à celui du mât 3 du rotor, entraîné en rotation autour d'un axe A. Le fût central 2 est, à sa partie supérieure, d'une pièce avec un plateau supérieur 4, s'étendant dans un plan sensiblement perpendiculaire à l'axe de rotation A du rotor, tandis que la partie supérieure 5 du mât 3 du rotor est d'une pièce avec un plateau inférieur 6, sur le bord intérieur duquel une bride annulaire 7, formée à l'extérieur de la partie inférieure du fût central 2, est fixée, par exemple par une couronne de boulons schématisés par les traits d'axe 8. Le plateau supérieur 4 et le plateau inférieur 6 ont chacun sensiblement la forme d'une étoile à quatre branches, l'ensemble étant disposé de manière à ce que les branches respectives des deux plateaux 4 et 6 aient les mêmes dimensions et soient exactement surperposées. Comme visible sur la figure 1, chacun des plateaux 4 et 6 présente une faible épaisseur, voisine de celle de la paroi du fût tubulaire 2, et les extrémités de ses bras présentent des surépaisseurs 9 ou 10, traversées par deux trous superposés, recevant chacun une bague épaulée 11. Les bras des deux plateaux 4 et 6 sont dimensionnés de façon que les axes des trous recevant les bagues 11 soient sensiblement parallèles à l'axe de rotation A du mât 3 du rotor et, comme cela apparaît sur la figure 1, le plateau inférieur 6 est renforcé, sur sa face inférieure, par des nervures radiales 12 se rattachant à la partie supérieure 5 du mât 3 du rotor. Les ensembles formés d'une part par le mât 3 du rotor et le plateau inférieur 6, et, d'autre part, par le fût central tubulaire 2 et le plateau supérieur 4 constituent chacun une pièce métallique unique, venue par exemple de matriçage.

Une butée sphérique lamifiée, d'un type connu, dont l'ensemble est désigné par 13, est montée entre les extrémités de chaque paire de bras superposés des deux plateaux 4 et 6.

La butée sphérique lamifiée 13, jouant simultanément le rôle d'articulation de traînée, de battement et d'incidence (pour la commande du pas) assure plusieurs fonctions: elle reprend les efforts centrifuges et les efforts radiaux s'exerçant sur la pale à laquelle elle est reliée, comme expliqué ci-après, avec de faibles déformations, et elle permet les mouvements angulaires de pas, avec un rappel élastique limité, ainsi que les oscillations de battement et de traînée de la pale. Les caractéristiques de souplesse en torsion et en battement et les caractéristiques de raideur en compression axiale et radiale résultent de la structure en sandwich de la partie centrale 14 de la butée 13, constituée d'un assemblage de coupelles rigides, métalliques ou composites, en portions sphériques alternées avec des couches minces d'élastomère pouvant être constituées par des mélanges à base de caout-chouc naturel, qui présente une bonne tenue en fatigue et d'excellentes qualités d'adhérence aux métaux, deux armatures, dont l'une présente une surface sphérique concave et l'autre une surface sphérique convexe, étant adhérisées par moulage à la partie centrale 14 de la butée sphérique lamifiée 13.

Dans la forme de réalisation représentée, l'armature présentant la surface sphérique convexe est constituée par un manchon rigide 15, métallique ou composite, dont la paroi externe présente deux renflements 16a et 16b en forme de calotte sphérique évidée, centrée sur l'axe longitudinal de la pale, l'ensemble constituant une seule pièce en alliage d'aluminium ou de titane par exemple.

Le manchon 15 se place entre les surépaisseurs 9 et 10 aux extrémités des bras superposés des plateaux supérieur 4 et inférieur 6, munis de leurs bagues épaulées 11, et les raccorde l'un à l'autre par l'intermédiaire d'une broche unique 17.

Cette broche métallique creuse 17 traverse les bagues 11 et un ensemble de deux bagues épaulées anti-friction 18 et d'une douille 19 formant entretoise, entre les épaulements des bagues 11 des deux plateaux 4 et 6.

Cette broche 17 présente une tête plate élargie 20, retenue contre un lamage 23 usiné dans la surépaisseur 9 du plateau supérieur 4 par le serrage d'un écrou 21 vissé et freiné (par exemple par une goupille) sur l'extrémité inférieure filetée de la broche 17 saillant sous la surépaisseur 10 du plateau inférieur 6. La tête 20 présente un méplat 20a coopérant avec le bord 23a du lamage 23 pour empêcher toute rotation de la douille 17 sur elle-même.

Aux extrémités de l'alésage central du manchon 15 sont disposées des bagues épaulées anti-frottement 22 montées à ajustage serré dans celui-ci. Ces bagues épaulées 22 sont dimensionnées de telle sorte que leur diamètre interne présente un léger jeu par rapport au diamètre externe des bagues 18 et que la cote d'empilement du manchon 15 et des deux épaulements des bagues 22 présente également un léger jeu par rapport à la distance entre les faces internes des épaulements des bagues 18.

Cette disposition permet ainsi un montage et un démontage aisé de la pale 26 sur le moyeu 1 par une seule broche 17 et, si besoin est, autorise sans démontage de ladite broche 17, le pivotement angulaire du manchon 15 autour de l'axe de la broche 17 pour permettre le »repliage« de la pale 26 correspondante.

L'autre armature de la butée sphérique lamifiée 13, présentant la portion de surface sphérique concave, est constituée par un bloc rigide 24, métallique ou composite, dont la forme externe est sensiblement celle d'un tronc de pyramide, dans la grande base duquel a été ménagée la portion de surface sphérique concave, tournée vers le renflement sphérique 16a du manchon 15, et dans la petite base duquel a été ménagée une gorge 25, débouchant sur les faces latérales du bloc 24 et tournée vers le fût central 2 du moyeu 1.

Dans la forme de réalisation représentée, chaque pale 26 du rotor comprend des stratifils, chaque stratifil étant constitué par un ensemble de fils de base, de filaments ou de fibres synthétiques ou minéraux à haute résistance mécanique, par exemple de verre, enduits et agglomérés parallèlement en un faisceau par une résine synthétique durcie, et ces stratifils constituent, dans la zone du pied de la pale 26, une boucle rigide continue 27 se prolongeant dans la partie courante de la pale pour former progressivement le longeron résistant, au bord d'attaque, ainsi que des éléments du bord de fuite. Les deux parties en vis-à-vis de la boucle de stratifils 27 sont séparées l'une de l'autre par un bloc 28 d'un matériau de remplissage du type dit »compound«, ce bloc 28 délimitant avec la partie d'extrémité de la boucle de stratifils 27 un espace libre constituant un logement pour la butée sphérique lamifiée 13 que la boucle de stratifils 27 entoure de façon continue, en venant se loger dans la gorge 25 de l'armature interne 24, les parois de ladite gorge 25 étant revêtues d'une mince couche 29 d'un matériau souple de protection. La partie d'extrémité de la boucle de stratifils 27 se logeant dans la gorge 25 de l'armature 24 est de préférence superficiellement revêtue de couches 27a de tissu de protection en fibres à haute résistance, par exemple de fibres de verre.

Entre le renflement 16b du manchon 15 et la paroi 28a du bloc de remplissage 28 tournée vers l'axe A du rotor, est disposée une pièce 30 en deux parties, offrant une portée sphérique concave 30a située en regard du renflement 16b. La pièce 30 est fixée sur une languette 33a solidaire de la branche 33 de l'étrier 31 d'un levier de pas décrit ci-après, par l'intermédiaire de deux boulons 30b.

Cette pièce 30, en forme de coin, constitue un dispositif de maintien et de blocage pour la boucle de stratifils 27 à fond de gorge 25, principalement lors du lancement et/ou de l'arrêt du rotor, avec ou non accompagnement de rafales de vent. Le contact s'établissant entre renflement 16b du manchon 15 et coin 30 évite la sortie intempestive de la boucle 27 de son longement 25 et tout effet néfaste qui pourrait s'ensuivre.

Par ailleurs, cette disposition facilite le montage de la pale 26 et libère la butée lamifiée 13 d'une partie de l'effort tranchant vertical dû au poids de la pale 26 lorsque celle-ci n'est plus sous l'effet de l'effort centrifuge.

Grâce au contournement de l'armature interne 24 de la butée sphérique lamifiée 13 par la bouche de stratifils 27 de la pale 26, cette dernière, dont le pied reçoit la butée 13, peut effectuer tous les débattements nécessaires autour du centre de cette butée 13, et la pale 26 peut aussi pivoter, pour son »repliage«, autour de l'unique broche 17, qui la retient au moyeu 1 par l'intermédiaire de la butée 13.

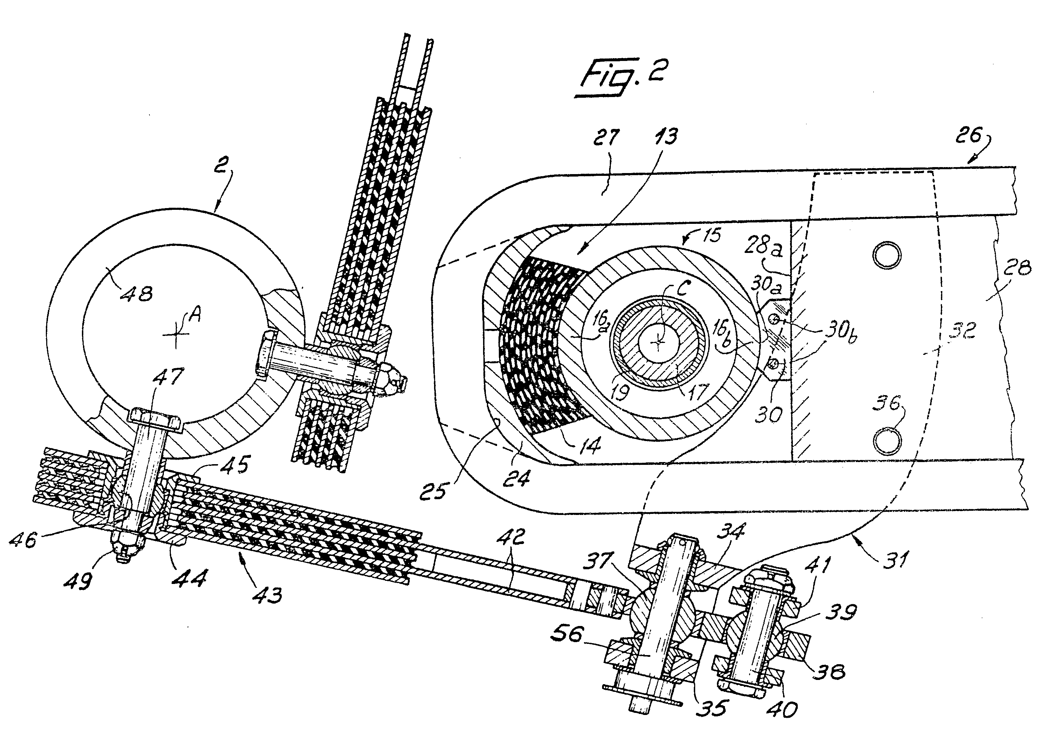

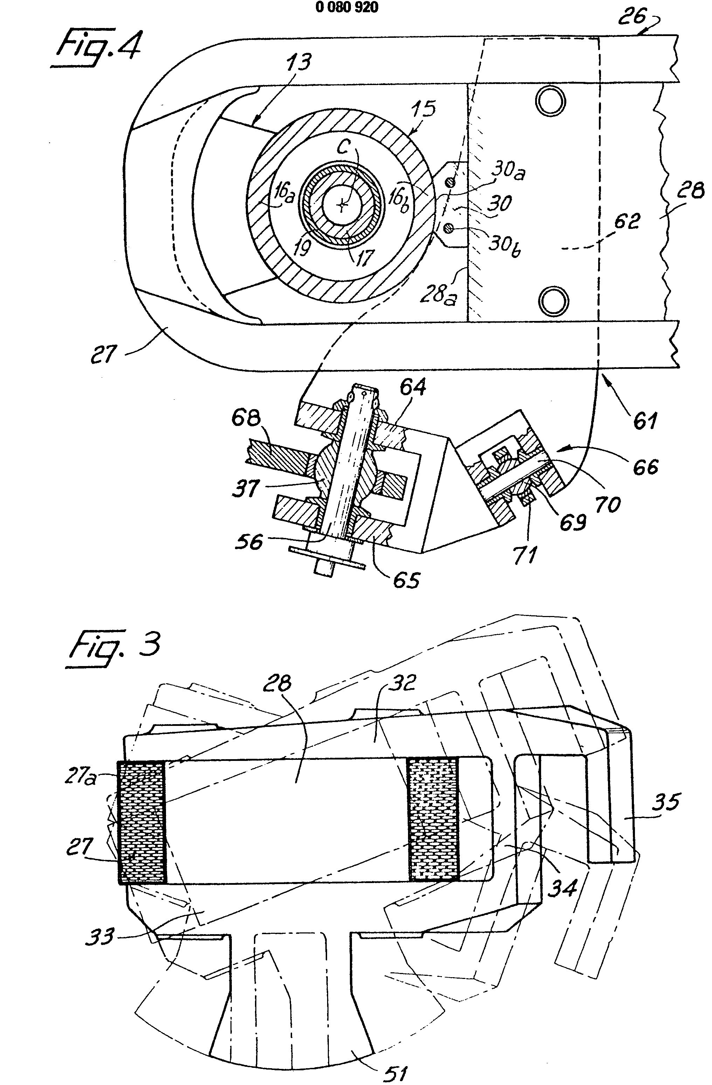

Le rotor comprend également, pour chaque pale 26, un levier de commande de pas 31 présentant, comme cela apparaît sur la figure 3, d'une part, un premier étrier, dont la branche supérieure 32 et la branche inférieure 33 s'étendent transversalement, respectivement au-dessus et au-dessous des deux parties en vis-à-vis de la boucle de stratifils 27 et du bloc de matériau de remplissage 28 du pied de la pale 26, et, d'autre part, un second étrier, dont une branche 34 relie les deux branches 32 et 33 du premier étrier et dont l'autre branche 35 s'étend à l'extérieur du premier étrier et se trouve reliée à la branche 34 par un prolongement de la branche supérieure 32 du premier étrier. Le levier de commande de pas 31 est fixé à la pale 26 par des boulons 36 traversant les deux branches 32 et 33 du premier étrier ainsi que le bloc de remplissage 28. Comme cela apparaît sur la figure 2, un axe 56 est monté amovible et tourillonnant sur les deux branches 34 et 35 du second étrier, au moyen respectivement d'une broche et de bague anti-frottement, et une rotule 37 est elle-même montée sur l'axe 56 et se trouve accouplée par une plaque 38 d'une part à une rotule 39, montée sur un axe amovible 40, réalisé au moyen d'un système vis-écrous reliant les deux branches d'une chape d'extrémité d'une biellette de commande de pas 41, et d'autre part, à l'extrémité externe de deux plaques métalliques allongées et parallèles 42, constituant l'extrémité externe d'un élément allongé de rappel élastique à amortissement incorporé 43, dénommé également contrefiche de rappel élastique en traînée, et constitué, de façon bien connue, d'un empilement alterné de plaques rigides, métalliques ou composites, et de plaques d'un matériau visco-élastique à grande rémanence aux déformations, tel qu'un élastomère de silicone. Cette contrefiche 43, qui permet d'entraîner les pales 26 en rotation et de contrer élastiquement leurs oscillations en traînée dans le plan du rotor, fait également office d'amortisseur de ces oscillations car, comme cela est déjà bien connu, celles-ci doivent être énergiquement amorties pour éviter qu'elles se couplent de façon instable avec les modes de déformations élastiques de la cellule du giravion et donner alors naissance au phénomène dynamique divergent, dangereux, connu sous la dénomination de »résonance-sol«.

Au voisinage de son extrémité interne la contrefiche 43 est partiellement traversée par deux coupelles à épaulements 44 et 45, disposées en sens inverse et délimitant dans la contrefiche 43 un logement recevant une rotule 46, montée sur la tige d'un boulon 47, qui traverse une zone annulaire 48 du fût central tubulaire 2 du moyeu 1, au niveau de laquelle la paroi de ce fût présente une surépaisseur intérieure, sensiblement à mi-hauteur du fût 2. La tête du boulon 47 est retenue à l'intérieur du fût tubulaire 2 et un écrou 49 est vissé et retenu par une goupille sur l'extrémité filetée de sa tige. Ce système vis-écrou est positionné de sorte que le centre de la rotule 46, par laquelle la contrefiche 43 d'une pale 26 du rotor est accouplée au moyeu 1, se trouve sensiblement sur l'axe longitudinal de l'une de deux autres pales du rotor adjacentes à la pale 26 correspondante. Cette rotule 46 est ainsi disposée dans l'intervalle qui subsiste entre le fût tubulaire 2 du moyeu 1 et la paroi extérieure de la boucle de stratifils 27 de cette pale adjacente, dans son logement de la butée sphérique lamifiée 13 correspondante, tandis que le centre de la rotule 37, par laquelle la contrefiche 43 est accouplée au levier de commande de pas 31 de la pale 26 correspondante, est sensiblement sur l'axe de battement de cette pale 26.

Comme représenté sur la figure 1, une butée 50, d'un type connu, éclipsable en vol sous l'action de la force centrifuge, est montée sous la surépaisseur 10 de l'extrémité du bras du plateau inférieur 6. Cette butée éclipsable 50 est avantageusement reçue sur l'extrémité inférieure de la broche 17, et coopère, en position de service, avec une portée 51 intégrée à la branche inférieure 33 du premier étrier du levier de commande de pas 31, lorsque le rotor est à l'arrêt ou tourne à faible vitesse, pour limiter le pivotement vers le bas de la pale 26, sous l'effet de son propre poids.

Lorsque le rotor est mis en rotation, par l'intermédiaire du mât rotor 3, le couple moteur est transmis à chaque pale 26 par la contrefiche associée, telle que 43, et lorsque le rotor a atteint sa vitesse de rotation normale, le système des forces centrifuges appliqué aux différents éléments de chaque pale telle que 26 soumet la butée sphérique lamifiée correspondante 13 à une résultante radiale, qui est encaissée par la compression de la partie centrale 14 de cette butée 13. D'autre part, sous l'action des différents moments et forces aérodynamiques et d'inertie qui s'exercent sur chaque pale, celle-ci prend une position d'équilibre en battement grâce à une déformation par cisaillement de la partie centrale 14 autour du centre C de la butée sphérique lamifiée 13.

Au régime normal du rotor, lorsque l'hélicoptère est en vol de translation, les oscillations de traînée de chaque pale telle que 26 sont largement amorties par la contrefiche de rappel élastique correspondante 43. Comme de plus la rotule 37, par laquelle l'extrémité externe de la contrefiche 43 est accouplée au pied de la pale 26 correspondante, par l'intermédiaire du levier de commande de pas 31, est voisine de l'axe de battement de la pale 26 correspondante, passant par le centre C de la butée 13, les mouvements de battement de cette pale ne donnent lieu qu'à des efforts de compression ou de traction négligeables sur cette contrefiche 43; cette dernière n'exerce donc que des actions négligeables de rappel élastique et d'amortissement sur ces mouvements de battement de la pale. Il en est de même des déplacements sensiblement verticaux de l'extrémité de la biellette de commande de pas 41, puisque ces déplacements sont également transmis au levier de commande de pas 31 par l'intermédiaire de cette même rotule 37. Par ailleurs, les butées telles que 50 étant alors escamotées par l'action de la force centrifuge, les battements des pales, correspondant à leur fonctionnement normal, ne sont plus limités vers le bas.

Lorsque le rotor est arrêté, la contrefiche 43 associée à chaque pale 26 reprend sa longuer et sa forme en exerçant sur le pied de la pale 26 correspondante une force de rappel, qui amène cette dernière dans sa position neutre; le fléchissement des pales vers le bas est alors à nouveau limité par les butées telles que 50, revenues dans leur position de coopération avec la portée 51 correspondante, lorsque la vitesse de rotation du rotor est tombée en dessous d'une valeur déterminée.

Les différentes positions du levier de commande de pas 31, et donc du pied de la pale 26 correspondante, sous l'action des déplacements sensiblement verticaux de la biellette de commande de pas 41, qui entraînent une rotation du levier 31 et une variation d'incidence de la pale 26, sont représentées en pointillés sur la figure 3.

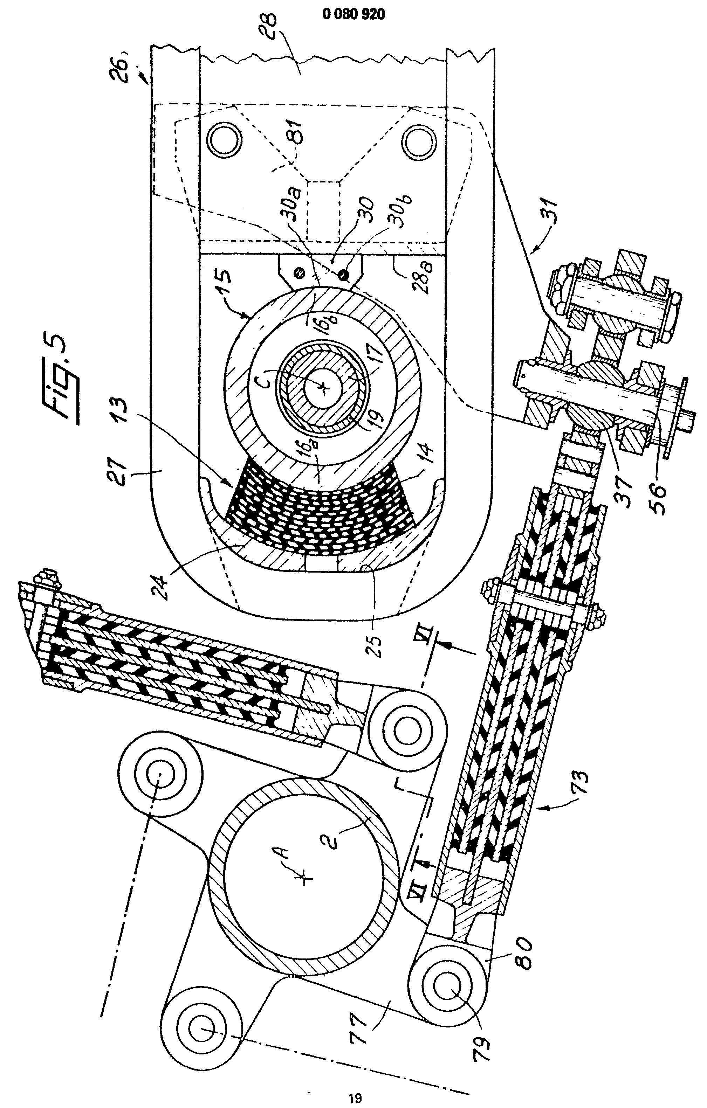

La variante du rotor, représentée partiellement sur la figure 4, ne se distingue de celle des figures 1 à 3 que par la structure du levier de commande de pas 61, présentant non seulement un premier et un second étrier analogues à ceux du levier de commande de pas 31, mais également un troisième étrier 66, rattaché comme le second à la branche supérieure 62 du premier étrier, et dont les branches supportent un axe amovible 70, sur lequel est montée une rotule 69 d'accouplement à la biellette de pas 71, tandis que les branches 64 et 65 du second étrier reçoivent l'axe amovible 56 portant la rotule 37 d'accouplement à l'extrémité externe de la contrefiche correspondante par l'intermédiaire de la plaque de liaison 68.

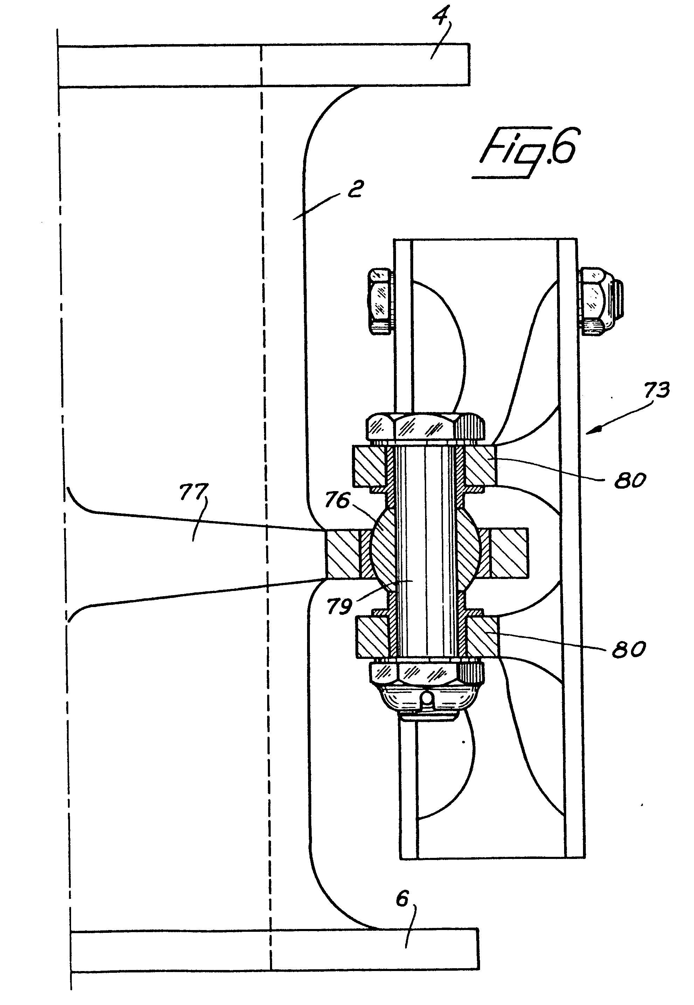

Sur les figures 5 et 6, on a représenté une variante du rotor selon les figures 1 à 3, qui ne se distingue essentiellement de ce dernier que par l'accouplement de l'extrémité interne de la contrefiche 73 sur le fût central tubulaire 2. En effet, ce dernier présente, sensiblement à la moitié de sa hauteur, des pattes de reprise 77 sensiblement radiales, saillant vers l'extérieur, et sur lesquelles sont montées des rotules 76 de liaison à l'extrémité interne de la contrefiche 73, dont l'extrémité externe est accouplée au levier de commande de pas 31 par la rotule 37, comme expliqué en référence aux figures 1 à 3. La rotule 76 est montée sur un axe amovible 79, constitué par un ensemble vis-écrou, et traversant des brides 80 d'attache à l'extrémité interne de la contrefiche 73, constituée par un empilement alterné de plaques rigides, métalliques ou composites, et de plaques d'un matériau visco-élastique à grande rémanence aux déformations.

Sur la figure 5 apparaît également, en pointillés, une portée 81 coopérant avec une butée basse escamotable en vol, telle que 50 sur la figure 1.

Pour les formes de réalisation de rotor quadripale représentées sur les figures 1, 2, 5 et 6, le »repliage« des pales 26 du rotor s'effectue en pivotant deux pales vers l'avant et deux pales vers l'arrière, autour des broches 17 de liaison des pales au moyeu.

Pour permettre l'exécution de ces pivotements, il suffit de désolidariser les biellettes de commande du pas et les contrefiches de rappel élastique en traînée du levier de commande de pas solidaire du pied de pale, en retirant le ou les axes amovibles prévus à cet effet.

La présente invention n'est pas limitée aux formes de réalisation qui viennent d'être décrites. Elle englobe toutes leurs variantes, notamment quant à la réalisation du moyeu. La forme de réalisation des butées basses escamotables, telles que 50, est matière à options ainsi que la forme et le mode de réalisation des contrefiches de rappel élastique en traînée.

Il est à noter que la forme en plan coudée des leviers de commande de pas 31 et 61 permet un bon positionnement de la rotule d'accouplement de l'extrémité externe de la contrefiche au voisinage de l'axe de battement de la pale correspondante.

En plus des avantages recherchés, que sont la légèreté et le faible encombrement du moyeu du rotor et son faible coût de fabrication, il apparaît qu'un rotor selon l'invention ne nécessite pratiquement aucune intervention de maintenance et présente une très faible vulnérabilité.

Enfin, dans son application à l'équipement des hélicoptères légers en particulier, un rotor selon l'invention, muni de pales métalliques de petites dimensions, est tel que, pour chaque pale, la boucle rigide soit constituée par une bride solidarisée à l'emplanture de la pale ou même usinée dans un prolongement du ou des longerons que comprend l'ossature résistante de la pale.

**Revendications**

1. Rotor pour giravions dont le moyeu rigide (1), comportant un fût central (2) sensiblement dans le prolongement du mât rotor (3) et portant un plateau supérieur (4) et un plateau inférieur (6), est accouplé au pied de chaque pale (26) par l'intermédiaire d'une butée sphérique lamifiée (13) et d'une contrefiche de rappel élastique en traînée (43—73) se présentant, de préférence, sous la forme d'un adaptateur de fréquences constitué par un empilement alterné de plaques rigides, métalliques ou composites, et de plaques de matériau visco-élastique à grande rémanence aux déformations, et ayant ses extrémités interne et externe accouplées chacune par une rotule (46-76-37) respectivement au moyeu (1) et au pied de la pale (26) correspondante, le centre de la rotule (37) de l'extrémité externe étant voisin de l'axe de battement de la pale (26), lequel passe par le centre C de la butée sphérique lamifiée (13) correspondante, dont l'un des éléments rigides (15), fixe par rapport aux plateaux (4) et (6), est disposé entre les bords de ces deux derniers, à la façon d'une entretoise rigide, caractérisé en ce que chaque pale (26) présente une ossature résistante comprenant, dans la zone du pied de pale, une boucle rigide (27) contournant de façon continue la butée sphérique lamifiée (13) correspondante et engagée dans l'autre élé-

ment rigide (24), mobile par rapport aux plateaux (4) et (6), de cette butée (13).

2. Rotor selon la revendication 1, caractérisé en ce que l'ossature résistante de chaque pale (26) comprend un agglomérat de stratifils (27), lesquels forment la boucle rigide contournant la butée sphérique lamifiée (13).

3. Rotor selon l'une des revendications 1 et 2, caractérisé en ce que l'élément rigide mobile de la butée sphérique lamifiée (13), dans lequel la boucle rigide de la pale (26) correspondante est engagée, est constitué par une armature (24), dont la face opposée à l'axe de rotation (A) du rotor se présente sous la forme d'une cuvette sphérique concave, et dont la face tournée vers l'axe de rotation (A) présente une cavité (25) servant de logement à la boucle rigide.

4. Rotor selon la revendication 3, caractérisé en ce qu'une mince couche (29) d'un matériau souple est interposée entre la boucle rigide et la cavité (25) correspondante.

5. Rotor selon l'une des revendications 1 à 4, caractérisé en ce que l'élément rigide fixe de la butée sphérique lamifiée (13) disposé à la façon d'une entretoise rigide entre les bords des deux plateaux (4) et (6), est constitué par un manchon (15), dont l'alésage est traversé par une unique broche (17) de liaison aux deux plateaux (4) et (6) et autour de laquelle la pale (26) correspondante est susceptible d'être pivotée et dont la paroi externe offre deux renflements (16a) et (16b), en forme de calotte sphérique évidée centrée sur l'axe longitudinal de la pale.

6. Rotor selon la revendication 5, caractérisé en ce que la broche (17) de liaison du manchon (15) aux deux plateaux (4) et (6) traverse des trous ménagés en regard l'un de l'autre dans les bords de ces deux derniers et recevant chacun une bague épaulée (11), et possède une tête élargie de retenue (20) se logeant, dans un lamage (23) de la face supérieure du plateau supérieur (4) et présentant un méplat (20a) coopérant avec le bord (23a) du lamage (23) pour empêcher toute rotation de la broche (17).

7. Rotor selon l'une des revendications 3 et 4, caractérisé en ce que dans l'alésage du manchon (15), traversé par la broche de liaison (17), de préférence creuse, sont disposés, d'une part, un ensemble de deux bagues épaulées antifriction (18) entretoisées par une douille (19), et d'autre part, aux extrémités dudit alésage, entre les bagues (18) et ledit alésage, des bagues épaulées anti-frottement (22), montées à ajustage serré et dimensionnées de telle sorte que leur diamètre interne présente un léger jeu par rapport au diamètre externe des bagues (18), et que l'empilement du manchon (15) et des deux épaulements des bagues (22) présente également un léger jeu par rapport à la distance entre les faces internes des épaulements des bagues (18).

8. Rotor selon l'une des revendications 1 à 7, caractérisé en ce que les deux parties en vis-à-vis de la boucle rigide du pied de chaque pale (26) sont séparées l'une de l'autre par un bloc de matériau de remplissage (28) délimitant avec la partie de la boucle rigide entourant de façon continue la butée sphérique lamifiée (13) un logement pour cette dernière.

9. Rotor selon la revendication 8, caractérisé en ce que les faces de la partie de la boucle rigide reçue dans le logement (25) de l'armature (24) sont revêtues d'au moins une couche de tissu stratifié de protection (27a), en fibres à haute résistance.

10. Rotor selon les revendications 1 à 9, caractérisé en ce qu'il comporte un dispositif de maintien et de blocage de la boucle rigide dans son logement (25), lequel dispositif est constitué par une pièce (30) en forme de coin, disposée entre le renflement sphérique (16b) du manchon (15) et la paroi (28a) du bloc de matériau de remplissage (28) tournée vers l'axe de rotor (A), et présentant une partie sphérique concave (30a) située en regard du renflement sphérique (16b), la pièce (30) en forme de coin étant fixée sur une languette (33a) solidaire d'un levier de commande de pas (31), (61) prévu pour la pale (26) correspondante.

11. Rotor selon la revendication 10, caractérisé en ce que chaque levier de commande de pas (31, 61) présente un premier étrier, dont les branches (32, 33) s'étendent transversalement l'une par-dessus et l'autre par-dessous le pied de la pale (26) correspondante, auquel le levier (31, 61) est fixé par des boulons (36), ainsi qu'un second étrier, dont les branches (34, 35—64, 65) portent un axe (56), de préférence amovible pour le pivotement de la pale (26) correspondante, et sur lequel est montée une rotule (37) d'accouplement à l'extrémité externe de la contrefiche de rappel élastique correspondante (43, 73).

12. Rotor selon la revendication 11, caractérisé en ce que l'extrémité externe de la contrefiche de rappel élastique correspondante (43, 73) liée à la rotule (37) est simultanément accouplée par l'intermédiaire d'une rotule (39) à une extrémité d'une biellette (41) de commande du pas de la pale (26) correspondante.

13. Rotor selon la revendication 11, caractérisé en ce que le levier de commande de pas (61) présente un troisième étrier (66), dont les branches portent un axe (70), de préférence amovible pour le pivotement de la pale (26) correspondante, et sur lequel est montée une rotule (69) d'accouplement à une extrémité d'une biellette (71) de commande du pas de la pale (26) correspondante.

14. Rotor selon l'une des revendications 1 à 13, caractérisé en ce que la rotule (46, 76) d'accouplement de l'extrémité interne de chaque contrefiche de rappel élastique (43, 73) au moyeu (1) est reliée par un système vis-écrous (47—49, 79) à une zone annulaire du fût central tubulaire (2) du moyeu (1).

15. Rotor selon la revendication 14, caractérisé en ce que la paroi du fût central tubulaire (2) présente au niveau de ladite zone annulaire une surépaisseur (48), traversée par des boulons (47) sur la tige desquels sont montées les rotules (46) des extrémités internes des contrefiches (43).

16. Rotor selon la revendication 14, caracté

risé en ce que la paroi du fût tubulaire (2) présente, au niveau de ladite zone annulaire, des pattes de reprise sensiblement radiales (77), sur lesquelles sont montées les rotules (76) des extrémités internes des contrefiches (73).

17. Rotor selon l'une des revendications 14 à 16, caractérisé en ce que le centre de la roture (46, 76) de l'extrémité interne de la contrefiche (43, 73) de chaque pale (26) est sensiblement sur l'axe longitudinal de l'une des pales adjacentes à la pale (26) correspondante.

18. Rotor selon l'une des revendications 1 à 17, caractérisé en ce qu'il comprend, sous le bord du plateau inférieur (6) et pour chaque pale (26), une butée (50), escamotable en vol, sous l'action de la force centrifuge, portée de préférence par l'extrémité inférieure de la broche (17) de liaison du pied de pale (26) aux deux plateaux (4) et (6), et disposée de façon à coopérer avec une portée (51, 81) solidaire de la pale (26), et de préférence intégrée à la branche inférieure (33) du premier étrier du levier de commande de pas (31), pour limiter les battements de la pale (26) vers le bas à l'arrêt et aux faibles vitesses de rotation du rotor.

19. Rotor selon l'une des revendications 1 à 18, caractérisé en ce que le fût central tubulaire (2) du moyeu (1), avec lequel le plateau supérieur (4) constitue un premier élément monobloc, est fixé, par exemple par une couronne de boulons (8), au plateau inférieur (6), constituant lui-même un second élément monobloc avec la partie supérieure (5) du mât rotor (3).

20. Rotor selon l'une des revendications 1 à 18, caractérisé en ce que le fût central tubulaire (2) du moyen (1), solidaire du plateau supérieur (4), est fixé, par exemple par une couronne de boulons (8), au plateau inférieur (6), lui-même solidaire de la partie supérieure (5) du mât rotor (3).

**Patentansprüche**

1. Rotor für Hubschrauber, dessen starre Nabe (1), die im wesentlichen in der Verlängerung des Rotormastes (3) einen zentralen Schaft (2) aufweist und eine obere Scheibe (4) sowie eine untere Scheibe (6) trägt, mit jeder Blattwurzel (26) unter Zwischenschaltung eines laminierten sphärischen Sitzes (13) und einer Strebe (43—73) zur elastischen Rückstellung im Rücktrieb gekoppelt ist, die vorzugsweise in Gestalt eines Frequenzadapters ausgebildet ist, welcher aus einer abwechselnden Anordnung von starren metallischen oder Verbundplatten einerseits und Platten aus zäh elastischem Werkstoff mit großer Remanenz gegenüber Verformungen andererseits besteht, wobei das innere und äußere Ende der Strebe jeweils durch einen Kugelbolzen (46—76—37) mit der Nabe (1) und der Blattwurzel des jeweiligen Rotorblattes (26) verbunden sind und der Mittelpunkt des Kugelbolzens (37) des äußeren Endes benachbart zur Schlagachse des Rotorblattes (26) liegt, welche durch den Mittelpunkt C des zugeordneten laminierten sphärischen Sitzes (13) hindurchtritt, und ferner eines der starren Elemente (15) des Sitzes, welches gegenüber den Scheiben (4) und (6) festliegt zwischen den Rändern dieser Scheiben in der Art eines starren Zwischenstücks angeordnet ist, dadurch gekennzeichnet, daß jedes Rotorblatt (26) einen resistenten Rahmen aufweist, welcher im Bereich der Blattwurzel eine starre Schleife (27) enthält, die in kontinuierlicher Weise den zugeordneten laminierten sphärischen Sitz (13) umgibt und im anderen starren Element (24) dieses Sitzes (13) eingesetzt ist, welches gegenüber den Scheiben (4) und (6) beweglich ist.

2. Rotor nach Anspruch 1, dadurch gekennzeichnet, daß der resistente Rahmen eines jeden Rotorblattes (26) ein Agglomerat von Faser- bzw. Fadenlagen (27) aufweist, welche die starre Schleife bilden, die den laminierten sphärischen Sitz (13) umgibt.

3. Rotor nach einem der Ansprüche 1 und 2, dadurch gekennzeichnet, daß das bewegliche starre Element des laminierten sphärischen Sitzes (13), in welchem die starre Schleife des zugeordneten Rotorblattes (26) eingesetzt ist, aus einer Armierung (24) besteht, dessen der Drehachse (A) des Rotors abgewandte Seite in Gestalt einer konkaven sphärischen Schale ausgebildet ist und dessen der Drehachse (A) zugewandte Seite einen Hohlraum (25) aufweist, der zur Aufnahme der starren Schleife dient.

4. Rotor nach Anspruch 3, dadurch gekennzeichnet, daß eine dünne Schicht (29) aus einem biegsamen Werkstoff zwischen der starren Schleife und dem zugeordneten Hohlraum (25) angeordnet ist.

5. Rotor nach einem der Ansprüche 1 bis 4, dadurch gekennzeichnet, daß das starre festliegende Element des laminierten sphärischen Sitzes (13), welches in der Art eines starren Zwischenstücks zwischen den Rändern der beiden Scheiben (4) und (6) angeordnet ist, aus einer Hülse (15) besteht, deren Lumen von einem einzigen Verbindungsdorn (17) zu den beiden Scheiben (4) und (6) durchdrungen wird und um welchen das zugehörige Rotorblatt (26) verschwenkt werden kann und dessen Außenwand zwei Wölbungen (16a) und (16b) in Gestalt einer hohlen sphärischen Kuppel aufweist, die auf der Längsachse des Rotorblattes zentriert ist.

6. Rotor nach Anspruch 5, dadurch gekennzeichnet, daß der Verbindungsdorn (17) der Hülse (15) zu den beiden Scheiben (4) und (6) durch Öffnungen hindurchtritt, die einander gegenüberliegend in den Rändern der Scheiben angeordnet sind und jeweils einen mit einer Schulter ausgestatteten Ring (11) aufnimmt, und ferner einen vergrößerten Halterungskopf (20) aufweist, der in einem Aufsatz (23) der Oberseite der oberen Scheibe (4) aufgenommen wird und eine Abflachung (20a) hat, die mit dem Rand (23a) des Aufsatzes (23) zusammenwirkt, um jede Drehung des Verbindungsdorns (17) zu verhindern.

7. Rotor nach einem der Ansprüche 3 und 4, dadurch gekennzeichnet, daß im Lumen der Hülse (15), die vom vorzugsweise hohlen Verbindungsdorn (17) durchdrungen wird, einerseits eine Anordnung von zwei mit Schultern versehenen Lagerringen (18) angeordnet ist, zwischen denen eine Hülse (19) liegt, und daß andererseits an den Enden des Lumens zwischen den Lagerringen (18) und im Lumen mit Schultern ausgestattete reibungsmindernde Ringe (22) angeordnet sind, die einen Festsitz aufweisen und derart bemessen sind, daß ihr Innendurchmesser ein geringes Spiel gegenüber dem Außendurchmesser der Lagerringe (18) aufweist, und daß die Schichtung der Hülse (15) und der beiden Schultern der Ringe (22) ebenfalls ein geringes Spiel gegenüber dem Abstand zwischen den Innenseiten der Schultern der Lagerringe (18) aufweist.

8. Rotor nach einem der Ansprüche 1 bis 7, dadurch gekennzeichnet, daß die beiden Abschnitte, die der starren Schleife der Blattwurzel jedes Rotorblattes (26) gegenüberliegen, voneinander durch einen Block (28) aus Füllmaterial getrennt werden, welcher mit dem Abschnitt der starren Schleife, der in kontinuierlicher Weise den laminierten sphärischen Sitz (13) umgibt, eine Lagerstelle für letzteren bildet.

9. Rotor nach Anspruch 8, dadurch gekennzeichnet, daß die Seiten des Abschnitts der starren Schleife, welche im Hohlraum (25) der Armierung (24) aufgenommen wird, mit mindestens einer Schicht aus geschichtetem Schutzgewebe (27a) überzogen sind, welche aus hochresistenten Fasern besteht.

10. Rotor nach den Ansprüchen 1 bis 9, dadurch gekennzeichnet, daß er eine Anordnung zur Halterung und Blockierung der starren Schleife in ihrem Hohlraum (25) aufweist, welche aus einem keilförmigen Element (30) besteht, das zwischen der sphärischen Wölbung (16b) der Hülse (15) und der Wand (28a) des Blocks (28) aus Füllmaterial angeordnet und gegen die Rotorachse (A) hin gedreht ist und dabei einen konkaven sphärischen Abschnitt (30a) aufweist, welcher der sphärischen Wölbung (16b) gegenüberliegt, wobei das keilförmige Element (30) auf einer Zunge (33a) befestigt ist, die fest mit einem Steigungs-Steuerhebel (31, 61) verbunden ist, der für das zugeordnete Rotorblatt (26) vorgesehen ist.

11. Rotor nach Anspruch 10, dadurch gekennzeichnet, daß jeder Steigungs-Steuerhebel (31, 61) einen ersten Bügel aufweist, von dessen Schenkeln (32, 33) sich der eine quer über und der andere quer unter dem zugeordneten Rotorblatt erstreckt, an welchem der Steigungs-Steuerhebel (31, 61) durch Bolzen (36) befestigt ist, sowie einen zweiten Bügel, dessen Schenkel (34, 35—64, 65) zur Verschwenkung des zugeordneten Rotorblattes (26) eine vorzugsweise abnehmbare Achse (56) tragen, auf welcher ein Kugelbolzen (37) zur Kopplung mit dem äußeren Ende der zugeordneten Strebe (43, 73) zur elastischen Rückstellung befestigt ist.

12. Rotor nach Anspruch 11, dadurch gekennzeichnet, daß das äußere Ende der zugeordneten Strebe (43, 73) zur elastischen Rückstellung, welches mit dem Kugelbolzen (37) verbunden ist, gleichzeitig mittels Zwischenschaltung eines Kugelbolzens (39) mit einem Ende einer Pleuelstange (41) zur Steuerung der Steigung des zugeordneten Rotorblattes (26) gekoppelt ist.

13. Rotor nach Anspruch 11, dadurch gekennzeichnet, daß der Steigungs-Steuerhebel (61) einen dritten Bügel (66) aufweist, dessen Schenkel eine vorzugsweise abnehmbare Achse (70) zur Verschwenkung des zugeordneten Rotorblattes (26) tragen, auf welcher ein Kugelbolzen (69) zur Kopplung mit einem Ende einer Pleuelstange (71) zur Steuerung der Steigung des zugeordneten Rotorblattes (26) befestigt ist.

14. Rotor nach einem der Ansprüche 1 bis 13, dadurch gekennzeichnet, daß der Kugelbolzen (46, 76) zur Kopplung des inneren Endes einer jeden Strebe (43, 73) zur elastischen Rückstellung mit der Nabe (1) über eine Schraube — Schraubenmutteranordnung (47—49, 79) mit einer Ringzone des zentralen rohrförmigen Schafts (2) der Nabe (1) verbunden ist.

15. Rotor nach Anspruch 14, dadurch gekennzeichnet, daß die Wand des zentralen rohrförmigen Schafts (2) in der Höhe der Ringzone eine Verdickung (48) aufweist, durch welche Bolzen (47) hindurchtreten, auf deren Schäften die Kugelbolzen (46) der inneren Enden der Streben (43) montiert sind.

16. Rotor nach Anspruch 14, dadurch gekennzeichnet, daß die Wand des rohrförmigen Schafts (2) in der Höhe der Ringzone im wesentlichen radiale Haltelaschen (77) aufweist, auf welchen die Kugelbolzen (76) der inneren Enden der Streben (73) befestigt sind.

17. Rotor nach einem der Ansprüche 14 bis 16, dadurch gekennzeichnet, daß der Mittelpunkt der Kugelbolzen (46, 76) des inneren Endes der Strebe (43, 73) eines jeden Rotorblattes (26) im wesentlichen auf der Längsachse eines der dem zugeordneten Rotorblatt (26) benachbarten Rotorblätter liegt.

18. Rotor nach einem der Ansprüche 1 bis 17, dadurch gekennzeichnet, daß er unter dem Rand der unteren Scheibe (6) und für jedes Rotorblatt (26) einen im Flug unter Einwirkung der Zentrifugalkraft versenkbaren Anschlag (50) aufweist, der vorzugsweise vom inneren Ende des Verbindungsbolzens (17) zwischen Blattwurzel (26) und den beiden Scheiben (4) und (6) getragen wird und derart angeordnet ist, daß er mit einem mit dem Rotorblatt (26) fest verbundenen Anschlag (51, 81) zusammenwirkt, und vorzugsweise in den unteren Schenkel (33) des ersten Bügels des Steigungs-Steuerhebels (31) integriert ist, um die Schlagbewegungen des Rotorblatts (26) nach unten beim Anhalten und bei geringen Rotordrehzahlen zu begrenzen.

19. Rotor nach einem der Ansprüche 1 bis 18, dadurch gekennzeichnet, daß der zentrale rohrförmige Schaft (2) der Nabe (1), mit welcher die obere Scheibe (4) ein erstes Monoblockelement bildet, an der unteren Scheibe (6) beispielsweise durch einen Kranz von Bolzen (8) befestigt ist, die ihrerseits ein zweites Monoblockelement mit dem oberen Teil (5) des Rotormastes (3) bildet.

20. Rotor nach einem der Ansprüche 1 bis 18, dadurch gekennzeichnet, daß der rohrförmige zentrale Schaft (2) der Nabe (1), welcher mit der oberen Scheibe (4) fest verbunden ist, beispielsweise mittels einem Kranz von Bolzen (8) an der unteren Scheibe (6) befestigt ist, die ihrerseits fest mit dem oberen Abschnitt (5) des Rotorschafts (3) verbunden ist.

## Claims

1. Rotor for rotorcraft of which the rigid hub (1), comprising a central strut (2) substantially in line with the rotor mast (3) and bearing an upper plate (4) and a lower plate (6), is coupled to the root of each blade (26) via a laminated spherical stop (13) and a brace for elastic return in drag (43—73) preferably in the form of a frequency adapter constituted by an alternate stack of metallic or composite rigid plates and of plates of visco-elastic material with considerable remanence to deformations, and having its inner and outer ends each coupled by a swivel joint (46—76—37) respectively to the hub (1) and to the root of the corresponding blade (26), the centre of the swivel joint (37) of the outer end being adjacent the flapping axis of the blade (26), which passes through the centre C of the corresponding laminated spherical stop (13), of which one of the rigid elements (15), fixed with respect to plates (4 and 6), is disposed between the edges of these two latter, in the manner of a rigid crosspiece, characterized in that each blade (26) presents a resistant framework comprising, in the zone of the blade root, a rigid loop (27) continuously surrounding the corresponding laminated spherical stop (13) and engaged in the other rigid element (24), mobile with respect to the plates (4 and 6) of this stop (13).

2. Rotor according to Claim 1, characterized in that the resistant framework of each blade (26) comprises an agglomerate of rovings (27), which from the rigid loop surrounding the laminated spherical stop (13).

3. Rotor according to one of Claims 1 and 2, characterized in that the mobile rigid element of the laminated spherical stop (13), in which the rigid loop of the corresponding blade (26) is engaged, is constituted by a reinforcement (24), of which the face opposite the axis of rotation (A) of the rotor is in the form of a concave spherical dish, and of which the face turned towards the axis of rotation (A) presents a cavity (25) serving as housing for the rigid loop.

4. Rotor according to Claim 3, characterized in that a thin layer (29) of a supple material is interposed between the rigid loop and the corresponding cavity (25).

5. Rotor according to one of Claims 1 to 4, characterized in that the fixed rigid element of the laminated spherical stop (13) disposed in the manner of a rigid crosspiece between the edges of the two plates (4) and (6), is constituted by a sleeve (15) of which the bore is traversed by a single pin (17) for connection of the two plates (4 and 6) and about which the corresponding blade (26) is capable of being pivoted and of which the outer wall offers two swellings (16a and 16b), in the form of recessed spherical cap centred on the longitudinal axis of the blade.

6. Rotor according to Claim 5, characterized in that the pin (17) for connection of the sleeve (15) to the two plates (4 and 6) passes through holes made opposite one another in the edges of these two latter and each receiving a shouldered ring (11), and possesses an enlarged retaining head (20) housed in a spotface (23) in the upper face of the upper plate (4) and presenting a flat portion (20a) cooperating with the edge (23a) of the spotface (23) to prevent any rotation of the pin (17).

7. Rotor according to one of Claims 3 and 4, characterized in that in the bore of the sleeve (15), traversed by the connecting pin (17), which is preferably hollow, there are disposed, on the one hand, an assembly of two shouldered anti-friction rings (18) spaced apart by a bush (19), and, on the other hand, at the ends of said bore, between the rings (18) and said bore, shouldered anti-friction rings (22) mounted with tight fit and dimensioned so that their inner diameter presents a slight clearance with respect to the outer diameter of the rings (18) and the stack of the sleeve (15) and the two shoulders of the rings (22) also presents a slight clearance with respect to the distance between the inner faces of the shoulders of the rings (18).

8. Rotor according to one of Claims 1 to 7, characterized in that the two opposite parts of the rigid loop of the root of each blade (26) are separated from each other by a block of filling material (28) defining with that part of the rigid loop continuously surrounding the laminated spherical stop (13), a housing for the latter.

9. Rotor according to Claim 8, characterized in that the faces of that part of the rigid loop received in the housing (25) of the reinforcement (24) are coated with at least one layer of laminated protecting fabric (27a), made of high-strength fibers.

10. Rotor according to Claims 1 to 9, characterized in that it comprises a device for maintaining and blocking in rigid loop in its housing (25) which device is constituted by a piece (30) in the form of a wedge, disposed between the spherical swelling (16b) of the sleeve (15) and the wall (28a) of the block of filling material (28) turned towards the rotor axis (A), and presenting a concave spherical part (30a) located opposite the spherical swelling (16b), the wedge shaped piece (30) being fixed on a tongue (33a) fast with a pitch control lever (31, 61) provided for the corresponding blade (26).

11. Rotor according to Claim 10, characterized in that each pitch control lever (31, 61) presents a first stirrup, of which the arms (32, 33) extend transversely one above and the other below the root of the corresponding blade (26), to which the lever (31, 61) is fixed by bolts (36), as well as a second stirrup of which the arms (34, 35—64, 65) bear a preferably removable pin (56) for the pivoting of the corresponding blade (26), and on which is mounted a swivel joint (37) for coupling to the outer end of the corresponding elastic return brace (43, 73).

12. Rotor according to Claim 11, characterized in that the outer end of the corresponding elastic return brace (43, 73) connected to the swivel joint (37) is simultaneously coupled via a swivel joint (39) to one end of a small rod (41) for controlling the pitch of the corresponding blade (26).

13. Rotor according to Claim 11, characterized in that the pitch control lever (61) presents a third stirrup (66) of which the arms bear a preferably removable pin (70) for the pivoting of the corresponding blade (26), and on which is mounted a swivel joint (69) for coupling to one end of a small rod (71) for controlling the pitch of the blade (26).

14. Rotor according to one of Claims 1 to 13, characterized in that the swivel joint (46, 76) for coupling of the inner end of each elastic return brace (43, 73) to the hub (1) is connected by a screw/nut system (47—49, 79) to an annular zone of the tubular central strut (2) of the hub (1).

15. Rotor according to Claim 14, characterized in that the wall of the tubular central strut (2) presents at the level of said annular zone an excess thickness (48), traversed by bolts (47) on the shank of which are mounted the swivel joints (46) of the inner ends of the braces (43).

16. Rotor according to Claim 14, characterized in that the wall of the tubular strut (2) presents, at the level of said annular zone, substantially radial take-up tabs (77), on which are mounted the swivel joints (76) of the inner ends of the braces (73).

17. Rotor according to one of Claims 14 to 16, characterized in that the centre of the swivel joint (46, 76) of the inner end of the brace (43, 73) of each blade (26) is substantially on the longitudinal axis of one of the blades adjacent the corresponding blade (26).

18. Rotor according to one of Claims 1 to 17, characterized in that it comprises, beneath the edge of the lower plate (6) and for each blade (26) a stop (50) retractable in flight, under the action of the centrifugal force, preferably borne by the lower end of the pin (17) for connection of the blade root (26) to the two plates (4 and 6), and disposed so as to cooperate with a bearing surface (51, 81) fast with the blade (26), and preferably integrated with the lower arm (33) of the first stirrup of the pitch control lever (31), in order to limit the downward flaps of the blade (26) when the rotor has stopped and at low speeds of rotation of the rotor.

19. Rotor according to one of Claims 1 to 18, characterized in that the central tubular strut (2) of the hub (1), with which the upper plate (4) constitutes a first monobloc element, is fixed, for example by a ring of bolts (8), to the lower plate (6), itself constituting a second monobloc element with the upper part (5) of the rotor mast (3).

20. Rotor according to one of Claims 1 to 18, characterized in that the central tubular strut (2) of the hub (1), fast with the upper plate (4), is fixed, for example by a ring of bolts (8), to the lower plate (6), itself fast with the upper part (5) of the rotor mast (3).

*Fig.1*

Fig. 2

*Fig.4*

*Fig. 3*

0 080 920

Fig.5

*Fig.*6